# DEMANDE DE BREVET EUROPEEN

(11) **EP 4 199 220 A2**
(43) Date de publication de la demande: **21.06.2023**
(21) Numéro de dépôt: 22208641.5
(22) Date de dépôt: 21.11.2022
(51) Int. Cl.: H01M 50/264, H01M 50/209, H01M 50/211

(54) **MODULE DE BATTERIE OU PACK-BATTERIE À EMPILEMENT D'ACCUMULATEURS INTÉGRANT DES LIENS SOUPLES AVEC FORMES COMPLÉMENTAIRES DE BLOCAGE EN TANT QUE MOYENS DE COMPRESSION, PROCÉDÉ DE RÉALISATION D'UN MODULE OU PACK-BATTERIE ASSOCIÉ**

(30) Priorité: 26.11.2021 FR 2112567
(71) Demandeur: Commissariat à l'énergie atomique et aux énergies alternatives, 75015 Paris (FR)
(72) Inventeur: DE PAOLI, Lionel, 38054 GRENOBLE CEDEX 09 (FR); MEE, Fabrice, 38054 GRENOBLE CEDEX 09 (FR)
(74) Mandataire: Cabinet Nony

(57) **Abrégé**

Module de batterie ou pack-batterie à empilement d'accumulateurs intégrant des liens souples avec formes complémentaires de blocage en tant que moyens de compression, Procédé de réalisation d'un module ou pack-batterie associé.

L'invention consiste essentiellement à proposer en tant que moyens de compression d'un module ou pack-batterie, un ou plusieurs éléments à lien souple qui entoure(nt) le module ou pack et dont l'une ou les deux extrémités libres sont insérées puis bloquées par complémentarités de formes à l'intérieur de logement(s) complémentaire(s) réalisé(s) à cet effet dans une ou deux plaques de compression à la périphérie du module ou pack-batterie.

## Description

### Domaine technique

La présente invention concerne le domaine des accumulateurs électrochimiques, et plus particulièrement des accumulateurs métal-ion.

Plus particulièrement, l'invention a trait à un module de batterie ou à un pack-batterie, à empilement d'accumulateurs à emballage souple ou rigide.

L'invention vise en premier lieu à fournir une solution de compression d'une pluralité d'accumulateurs d'un module ou pack-batterie qui permette d'assurer une reprise d'effort ciblée au sein du module ou pack batterie avec une compacité et une masse optimisées tout en étant facilement assemblable et démontable.

Bien que décrite en référence à un accumulateur Lithium-ion, l'invention s'applique à tout accumulateur électrochimique métal-ion, c'est-à-dire également Sodium-ion, Magnésiumion, Aluminium-ion...ou de manière plus générale à tout accumulateur électrochimique. L'invention s'applique à toute chimie d'accumulateurs métal-ion, comme par exemple NMC/Graphite, NCA/Graphite, NMC/G-Si, LFP/ Graphite, Na-ion avec électrolyte liquide ou électrolyte dit solide.

Un module de batterie pack-batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

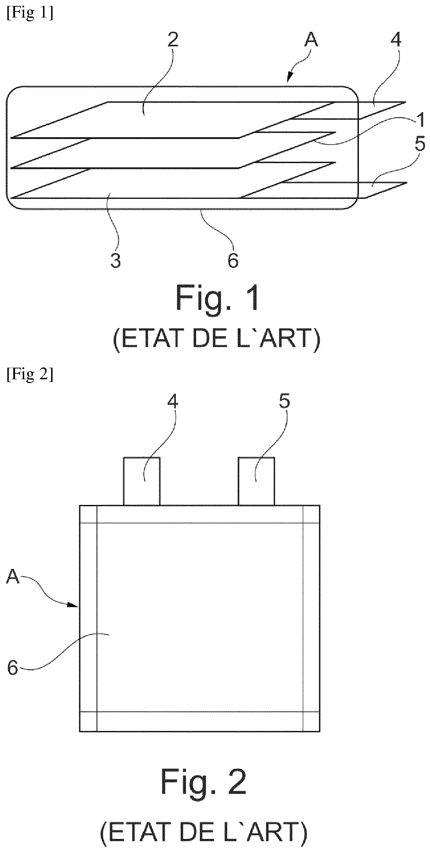

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique et la rendre étanche à l'air extérieur et à l'électrolyte à l'intérieur de la cellule, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF₆.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde de manganèse lithié, éventuellement substitué, LiMn₂O₄ ou d'oxyde de métaux de transition, comme les matériaux lamellaires par exemple, un matériau à base de LiNixMnyCo₂O₂ avec x+y+z = 1, tel que LiNi_{0.33}Mn_{0.33}Co_{0.33}O₂, ou un matériau à base de type oxyde de nickel cobalt aluminium LiNixCoyAlzO2 avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut-être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en nickel, en cuivre nickelé ou en aluminium.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C).

Traditionnellement, une batterie ou accumulateur Li-ion utilise un couple de matériaux à l'anode et à la cathode lui permettant de fonctionner à un niveau de tension, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme l'acrylonitrile butadiène styrène (ABS).

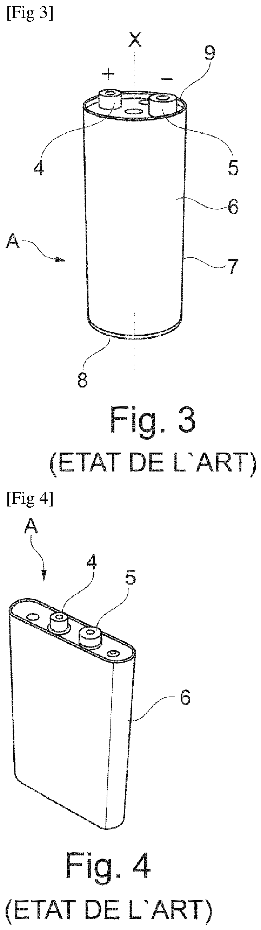

Un des types de boitier rigide de forme cylindrique, usuellement fabriqué pour un accumulateur Li-ion de forte capacité, est illustré en figure 3.

Un boitier rigide de forme prismatique est également montré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne positive 4 est soudée sur le couvercle 9 tandis que l'autre borne de sortie, par exemple la borne négative 5, passe à travers le couvercle 9 avec interposition d'un joint non représenté qui isole électriquement la borne négative 5 du couvercle.

Le type de boitier rigide largement fabriqué consiste également en un godet embouti et un couvercle, soudés entre eux sur leur périphérie. En revanche, les collecteurs de courant comprennent une traversée avec une partie faisant saillie sur le dessus du boitier et qui forme une borne aussi appelée pôle apparent de la batterie.

Les emballages souples, communément désignés sous la dénomination anglo-saxonne « Pouch », sont usuellement fabriqués à partir d'un matériau composite multicouche constitué d'une feuille d'aluminium recouverte par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N °ADR-0N25/AL40/CPP80.

L'avantage principal des emballages souples est leur légèreté. Les accumulateurs Li-ion avec les plus grandes densités d'énergie comportent de ce fait un emballage souple. Les accumulateurs à emballage souple sont de plus en plus utilisés du fait de leur densité énergétique élevée.

Un accumulateur souple, communément appelé en anglais « *Thin Film Battery*», est le plus souvent constitué d'une seule cellule électrochimique.

L'épaisseur totale de l'accumulateur avec son emballage souple est généralement inférieure à 16 mm, qui est fonction des dimensions et de la chimie des matériaux d'électrodes, et ce sans altérer les performances lors du fonctionnement de l'accumulateur.

Un pack batterie est constitué d'un nombre variable d'accumulateurs pouvant atteindre plusieurs milliers qui sont reliés électriquement en série ou en parallèle entre eux et généralement par des barres de connexion, appelées usuellement busbars.

Un module de batterie ou un pack-batterie à accumulateurs souples est un assemblage par empilement d'une pluralité de ces accumulateurs souples de géométrie prismatique.

Dans le cadre de l'invention, on entend par « accumulateur de géométrie prismatique », un accumulateur de forme globalement prismatique, c'est-à-dire de forme globalement parallélépipédique, aplati selon une dimension, indépendamment de son mode de réalisation qui pourra être par enroulement d'une cellule, par empilement (« stacking »), etc.

Un système électrochimique lithium, que ce soit à l'échelle cellule, module ou pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction. On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule augmente jusqu'à destruction, ce phénomène étant désigné usuellement sous l'appellation d'emballement thermique. Cet emballement peut être suivi d'une génération de gaz et d'explosion et/ou feu.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Dans une batterie, ou pack-batterie à plusieurs accumulateurs Li-ion, la mise en série ou parallèle d'accumulateurs plus ou moins différents peut entraîner des conséquences sur la performance résultante du pack.

Il est ainsi reconnu que dans un pack-batterie, par exemple de véhicule électrique, les dispersions de vieillissements peuvent être élevées en fonction par exemple de la position des accumulateurs, suite à des dissymétries de vieillissement entre les accumulateurs ou des différences d'utilisations (variations thermiques entre le cœur et les bords du pack, gradient de courant...).

Aussi, afin de limiter le vieillissement prématuré du pack, il est nécessaire d'optimiser la température de fonctionnement et la dispersion de température d'un accumulateur à l'autre. Un accumulateur (ou des accumulateurs) qui vieillit (vieillissent) plus vite que les autres peut (peuvent) avoir un impact direct sur les performances électriques du pack-batterie complet.

A l'échelle du module et du pack, typiquement en dessous de 0°C par exemple, il peut être nécessaire d'avoir recours à un BMS, afin de limiter la puissance demandée au pack afin d'éviter une dégradation des accumulateurs.

On rappelle ici que le BMS (acronyme anglais de « Battery Management System ») est utilisé afin de protéger les éléments de facteurs augmentant leur dangerosité, tel des courants trop élevés, des potentiels non adaptés (trop élevés ou trop faibles), des températures limites et a donc notamment pour fonction d'arrêter les applications de courant dès l'atteinte de valeurs de tension seuil, i.e. une différence de potentiels entre les deux matériaux d'insertion actifs. Le BMS stoppe donc les applications de courant (charge, décharge) dès l'atteinte de tensions seuils.

Au-delà d'une température supérieure, typiquement de l'ordre 70°C, il convient également d'être vigilant car des réactions électrochimiques peuvent conduire à la destruction des accumulateurs unitaires et provoquer une propagation d'un défaut interne à l'accumulateur, généralement un court-circuit interne, qui peut conduire à l'extrême à l'explosion du pack. Dans ce cas, il est également nécessaire d'avoir recours au BMS, afin de protéger les accumulateurs.

La difficulté intervient pour assurer l'uniformité de la température au sein d'un pack-batterie.

Par conséquent, ces considérations thermiques imposent généralement une régulation de la température des accumulateurs d'un pack batterie pour limiter leur dégradation et ainsi augmenter leur durée de vie et leurs performances.

Les systèmes de gestion thermique par immersion entrainent dans la majorité des cas une augmentation de la pression interne d'un accumulateur. La déformation induite oblige à surdimensionner l'emballage afin de garder son intégrité. La masse et le volume sont alors fortement impactés. Les performances du pack-batterie sont donc réduites Une problématique importante est donc de gérer la pression au sein d'un pack-batterie.

En pratique, les accumulateurs d'un pack-batterie doivent parfois être mis en compression mécanique, afin de maximiser leur durée de vie.

En effet, il est connu qu'une bonne maitrise d'une force de compression appliquée aux cellules électrochimiques apporte un gain en durée de vie des cellules et du pack-batterie afférent.

Il est également connu qu'il existe une force de compression optimale pour les cellules permettant de maximiser leur durée de vie. Si la force de compression est réduite de 50% par rapport à la force de compression optimale, on constate généralement une hausse du vieillissement de l'ordre également de 50%.

De fait, une compression appliquée sur la plus grande surface active d'une cellule électrochimique limite la délamination de ses couches internes (électrodes, séparateur, couches actives) et donc permet un gain significatif de performances en durée de vie et en fonctionnement nominal.

Selon la forme des accumulateurs, la compression à appliquer revêt plus ou moins d'importance. Dans le cas d'accumulateur à géométrie prismatique avec un emballage souple ou rigide, il s'avère que la compression est primordiale.

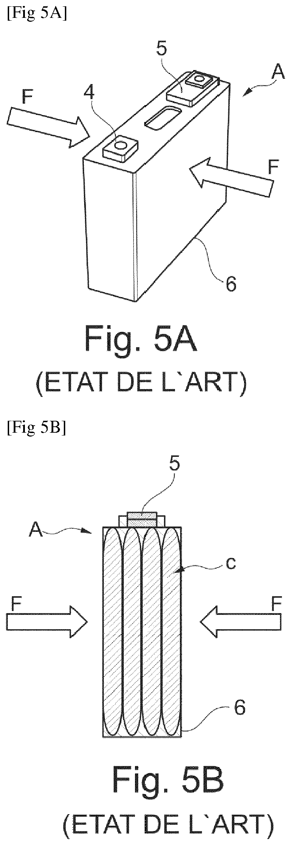

On a représenté de manière schématique en figures 5A et 5B, les forces de compression F telles qu'elles doivent être mises en œuvre sur les faces principales, c'est-à-dire sur les bords longitudinaux, d'un emballage souple ou rigide 6 d'un accumulateur Li-ion A afin de comprimer les différentes couches de la cellule électrochimique C.

Usuellement, la compression est appliquée au moyen de tirants mécaniques qui sont agencés autour des différents accumulateurs empilés par groupe. Ainsi par exemple, la demande de brevet FR2963484 divulgue une solution de reprise d'efforts d'un pack-batterie d'accumulateurs prismatiques rigides au moyen de tirants filetés.

Le couple de serrage appliqué aux tirants détermine la force de compression appliquée sur les cellules.

L'utilisation de tirants mécaniques nécessite plus de volume pour le pack-batterie et oblige d'avoir un ancrage au niveau des plaques de compression suffisamment robuste pour tenir les contraintes mécaniques.

En outre, un inconvénient majeur des tirants mécaniques est qu'il est très difficile de maîtriser la force de compression au cours du fonctionnement des accumulateurs du pack-batterie, ainsi qu'au cours de leur vieillissement. En effet, lors de la charge et de la décharge des accumulateurs, et lors de leur vieillissement, ceux-ci ont tendance à subir des variations de volume par gonflement/dégonflement des cellules.

Ce phénomène de gonflement des cellules s'accentue avec leur vieillissement, ce qui entraîne une forte hausse de la force de compression à appliquer. De fait, cela dégrade la durée de vie des cellules et induit un surdimensionnement mécanique et de matière active.

Ainsi, de manière générale, usuellement, pour compenser cette dégradation prévisible, les fabricants conçoivent un pack-batterie surdimensionné pour assurer une performance déterminée en fin de vie. Par exemple, pour une performance en fin de vie d'un pack à 10Ah, typiquement au bout de 10ans, les concepteurs dimensionnent initialement un pack-batterie de 12Ah. Autrement dit, ils prévoient une marge de l'ordre de 20% pour compenser le vieillissement des cellules.

Le brevet US7858224B2 divulgue une solution mécanique alternative aux tirants mécaniques: la compression est assurée par le serrage de deux sangles disposées sur des plaques de compression de part et d'autre d'un empilement d'accumulateurs agencés côte à côte et séparées par des plaques d'entretoise à l'intérieur desquelles un fluide caloporteur circule. Ce dispositif de serrage par sangles et plaques de compression présente le même inconvénient majeur qu'un dispositif à tirants mécaniques.

Le brevet US6372377B1 divulgue un pack-batterie d'accumulateurs de type nickel-hydrure métallique Ni-MH, sous la forme d'un module d'accumulateurs empilés qui met en œuvre des barres métalliques positionnées le long des quatre côtés du module et sont soudées aux quatre coins du module où les barres se rencontrent, formant ainsi une bande continue autour du module. Ce dispositif de serrage par barres métalliques soudées ne permet pas de gestion de la compression dans le temps. En outre, la compression appliquée est uni-axiale.

Une solution déjà industrialisée par un constructeur de véhicules automobiles fait appel à un robot pour la mise en place de plaques d'aluminium qui sont soudées au sein d'un module de batterie.

Cette solution nécessite des moyens industriels complexes sans possibilité de démontage et de réglage de la compression ni initialement, ni au cours du fonctionnement des accumulateurs du pack-batterie, ainsi qu'au cours de leur vieillissement.

Outre les inconvénients précités, toutes les solutions mécaniques proposées jusqu'à présent impliquent nécessairement le rajout de pièces mécaniques conséquentes (plaques de compression, tirants, sangles, barres...), ce qui alourdit les pack-batteries et peut complexifier leur assemblage.

Il existe un besoin d'améliorer les solutions de compression (reprise des efforts mécaniques) des accumulateurs d'un module ou pack-batterie, notamment afin d'augmenter la durée de vie de ce dernier et ce, de manière optimisée en termes de puissance, encombrement et poids et de permettre un assemblage aisé et démontable.

En outre, l'amélioration ne doit pas se faire au détriment du besoin de maitrise de la sécurité de fonctionnement de chaque accumulateur.

Le but de l'invention est de répondre au moins en partie à ce(s) besoin(s).

### Exposé de l'invention

Pour ce faire, l'invention concerne, sous l'un de ses aspects, un module de batterie ou pack-batterie comprenant :
- une pluralité d'accumulateurs, accolés les uns sur les autres, en particulier de géométrie prismatique, chaque accumulateur comprenant chacun au moins une cellule électrochimique C formée d'une cathode, d'une anode et d'un électrolyte intercalé entre la cathode et l'anode, et un emballage souple ou rigide agencé pour contenir avec étanchéité la cellule électrochimique;
- au moins deux plaques de compression en appui chacune contre la pluralité des accumulateurs accolés, au moins une des deux plaques de compression comprenant au moins un logement;
- au moins un élément de compression comprenant un lien souple et au moins une forme de blocage intégrée à ou solidaire d'une des extrémités libres du lien souple, l'élément de compression étant agencé relativement aux accumulateurs et aux plaques de compression de sorte que, lorsque la forme de blocage est bloquée par complémentarités de formes dans le(s) logement(s) de la (des) plaque(s) de compression, le lien souple exerce un effort de traction sur plaques de compression en les maintenant plaquées contre la pluralité des accumulateurs accolés.

De préférence, le logement est réalisé sur un bord de la plaque de compression et est prolongé d'une échancrure adaptée pour le passage du lien souple. Avec une telle configuration, le montage/démontage du lien souple est davantage facilité.

De préférence encore, le lien souple est non élastique ou faiblement élastique. Il comprend au moins un fil ou câble qui peut être en matériau textile, métallique ou composite. Par « faiblement élastique », on entend ici et dans le cadre de l'invention, un allongement sous effort faible voire très faible pour le lien compte tenu de son matériau constitutif et de son design, notamment de sa section. Le module d'élasticité du lien souple est de préférence inférieur à 100 GPa et de préférence inférieur à 70 GPa. Pour un fil ou câble en matériau textile, l'allongement sous effort peut être de l'ordre de 3 à 4% et un fil ou câble en matériau métallique/ alliage métallique de l'ordre de 10 %. Le choix de ces caractéristiques est fait en fonction de la configuration recherchée pour le module.

Avantageusement, la forme de blocage est constituée par au moins une portion de sphère rapportée sur l'extrémité libre du lien souple.

La portion de sphère peut être matricée, sertie ou surmoulée sur l'extrémité libre du lien souple. On précise qu'une portion de sphère est matricée sur le lien souple lorsqu'elle est réalisée par un procédé dit de matriçage qui permet de façonner la portion de sphère par serrage directement sur le lien souple à partir d'un modèle prédéfini. La solidarisation, notamment le sertissage des formes de blocage au lien soupe peut être réalisée de différentes manières, telles qu'un enroulement, en serpentin, par pliage, afin d'éviter une potentielle désolidarisation sous fortes sollicitations en traction.

Selon un mode de réalisation avantageux, le module ou pack-batterie comprend:
- deux plaques de compression de part et d'autre des faces longitudinales de la pluralité des accumulateurs accolés;
- au moins un élément de compression dont le lien souple comprend une forme de blocage à chacune de ses extrémités libres, le lien souple étant agencé autour et en appui contre les faces latérales des accumulateurs avec chacune des formes de blocage bloquée dans un logement d'une des deux plaques de compression en les compressant chacune contre la face longitudinale de la pluralité des accumulateurs accolés sur laquelle elle est en appui.

Selon ce mode, il est prévu avantageusement quatre éléments de compression répartis deux-à-deux sur les faces latérales du module.

Selon un autre mode de réalisation avantageux, les accumulateurs sont agencés côte à côte et leurs faces longitudinales sont séparées par au moins une couche d'entretoise en matériau compressible.

Pour une application Li-ion, chaque accumulateur est un accumulateur Li-ion dans lequel par exemple:
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

L'invention a enfin pour objet un procédé de réalisation d'un module de batterie ou pack batterie tel que décrit précédemment, comprenant les étapes suivantes :
i/ agencement en les accolant d'une pluralité d'accumulateurs, en particulier de géométrie prismatique, chaque accumulateur comprenant chacun au moins une cellule électrochimique C formée d'une cathode, d'une anode et d'un électrolyte intercalé entre la cathode et l'anode, et un emballage souple ou rigide agencé pour contenir avec étanchéité la cellule électrochimique;
ii/ mise en place d'au moins une plaque de compression le long d'une face des emballages des accumulateurs agencés à la périphérie du module, la plaque de compression comprenant au moins un logement;
iii/ mise en place d'au moins un élément de compression comprenant un lien souple et au moins une forme de blocage intégrée à ou solidaire d'une des extrémités libres du lien souple, de sorte que, lorsque la forme de blocage est bloquée par complémentarités de formes dans le logement de la plaque de compression, le lien souple exerce un effort de traction sur cette dernière en la maintenant plaquée contre la face des accumulateurs.

Ainsi, l'invention consiste essentiellement à proposer en tant que moyens de compression d'un module ou pack-batterie, un ou plusieurs éléments à lien souple qui entoure(nt) le module ou pack et dont l'une ou les deux extrémités libres sont insérées puis bloquées par complémentarités de formes à l'intérieur de logement(s) complémentaire(s) réalisé(s) à cet effet dans une ou deux plaques de compression à la périphérie du module ou pack-batterie.

Au final, l'invention apporte de nombreux avantages parmi lesquels on peut citer:
- une solution de reprise d'efforts mécaniques par lien souple et formes complémentaires de blocage, qui est compacte, très légère et garantit une tenue en traction élevée avec un allongement sous effort qui peut être très faible, typiquement inférieur à 4 %;
- une solution aisément montable et démontable, sans outil, l'insertion d'une forme de blocage du lien souple dans un logement prévu à cet effet dans une plaque de compression pouvant être réalisé manuellement. La maintenance d'un module ou pack-batterie mettant en œuvre une solution selon l'invention est donc facilitée;
- la possibilité de mettre en œuvre la solution selon l'invention sur tout type d'accumulateurs, quel que soit le type de module ou pack-batterie, même pour des sollicitations élevées dans des environnements difficiles (froid/chaud...) en statique et dynamique.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion de format prismatique avec son emballage souple selon l'état de l'art.
[Fig 3] la figure 3 est une vue en perspective d'un accumulateur lithium-ion de format cylindrique avec son emballage rigide (boitier) selon l'état de l'art.
[Fig 4] la figure 4 est une vue en perspective d'un accumulateur lithium-ion de format prismatique avec son emballage rigide (boitier) selon l'état de l'art.
[Fig 5A] est une vue schématique illustrant les forces de compression qui doivent être appliquées sur les faces principales d'un accumulateur Li-ion de format prismatique.
[Fig 5B] est une autre vue schématique illustrant les forces de compression qui doivent être appliquées sur les faces principales d'un accumulateur Li-ion de format prismatique.
[Fig 6] la figure 6 est une vue en perspective d'un module de batterie avec plaques de compression et éléments de compression à lien souple selon un mode de réalisation de l'invention.
[Fig 7] la figure 7 est une vue de détail de la figure 6.
[Fig 8] la figure 8 est une vue en perspective d'un élément de compression à lien souple et sphères de blocage selon l'invention.

### Description détaillée

Les figures 1 à 4 sont relatives à des exemples différents d'accumulateur Li-ion, d'emballages souples et d'un module de batterie selon l'état de l'art. Ces figures 1 à 4 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 8.

Dans l'ensemble de la présente demande, les termes « inférieur », « supérieur », « bas », « haut », « dessous » et « dessus » sont à comprendre par référence par rapport à un module de batterie selon l'invention avec des accumulateurs Li-ion positionnés à la verticale.

De même, les termes « longitudinaux » et « latéraux » sont à considérer par rapport aux dimensions d'un accumulateur et d'un module ou pack-batterie. Une face longitudinale ou principale est celle qui s'étend dans le sens de la longueur d'un accumulateur tandis qu'une face latérale s'étend dans le sens de la largeur.

Dans les exemples illustrés ci-après, les accumulateurs A1 à A3 illustrés sont de format prismatique, à emballage rigide sous la forme d'un boitier.

Les accumulateurs A1 à A3 peuvent être reliés électriquement en série et/ou en parallèle dans un module ou dans un pack-batterie.

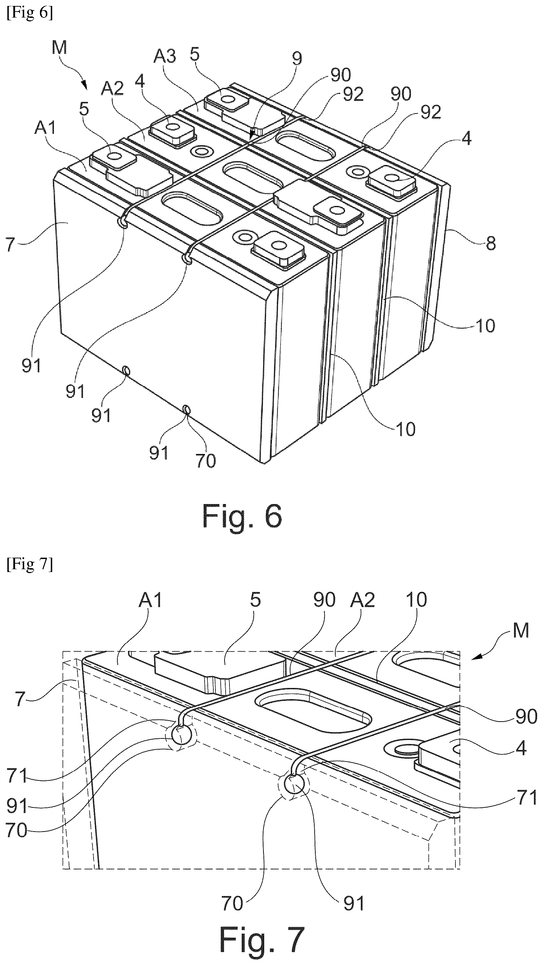

On a représenté en figures 6 et 7, un exemple d'une partie de module de batterie M comprenant plusieurs accumulateurs adjacents A1, A2, A3, c'est-à-dire accolés les uns sur les autres dont les bornes de sortie 4, 5 sont toutes reliées électriquement entre elles.

Le module M comprend deux plaques de compression 7, 8 agencées de part et d'autre sur les bords longitudinaux du module, c'est-à-dire en appui contre les faces longitudinales des accumulateurs A1 et A3 dans l'exemple illustré.

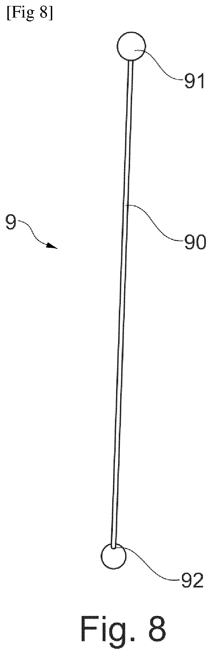

Pour maintenir compressées les plaques 7, 8 contre les accumulateurs A1 et A3, au moins un élément de compression 9, de préférence plusieurs éléments de compression tels que représentés en figure 8 sont mis en œuvre.

Un élément de compression 9 comprend un lien souple 90 constitué par au moins un fil ou câble, avec à chacune de ses extrémités libres, une portion de sphère 91, 92 qui est solidarisée. Cette solidarisation peut être réalisée par une technique de matriçage, sertissage, ou encore surmoulage.

Dans l'exemple illustré, quatre éléments de compression 9 sont répartis deux-à-deux sur les faces latérales du module.

Plus précisément, chaque lien souple 90 d'un élément de compression 9 agencé autour et en appui contre les faces latérales des accumulateurs A1, A2 et A3 et chacune des portions sphériques de blocage 91, 92 est bloquée dans un logement 70 prévu à cet effet d'une des deux plaques de compression 7, 8. Comme montré en figure 7, le logement 70 est sur un bord d'une plaque de compression 7, 8 et prolongé par une échancrure 71 qui permet le passage du lien souple 90.

Avec cet agencement des éléments de compression 9, ceux-ci exercent chacun un effort de traction qui met en compression chacun des plaques 7, 8 contre la face longitudinale des emballages d'accumulateurs sur laquelle elle est en appui.

On peut prévoir avantageusement d'agencer au moins une couche d'entretoise en matériau compressible 10 entre deux faces longitudinales d'accumulateur adjacents. Cette couche 10 peut ainsi par sa compression lors du fonctionnement des accumulateurs absorber la déformation de leurs boitiers 6, sans que les éléments de compression subissent une contrainte plus importante que celle induite par leur montage. Cette couche compressible 10 amène plus une compressibilité additionnelle par rapport aux boitiers 6 des accumulateurs, qui permet la mise en place des éléments de compression 9.

Pour procéder au montage d'un module de batterie M qui vient d'être décrit on peut procéder comme suit.
Etape i/ : on agence en les accolant les accumulateurs, A1, A2, A3, le cas échéant en intercalant entre eux au moins une couche de matériau compressible 10.
Etape ii/ : on met en place les deux plaques de compression 7, 8 chacune le long d'une face des boitiers 6 des accumulateurs A1, A2, A3 agencés à la périphérie du module, la plaque de compression comprenant au moins un logement;
Etape iii/ : pour chaque élément de compression 9, on insère une portion sphérique 91 dans un logement 70 d'une plaque 7, de sorte à la bloquer par complémentarités de formes dans ce dernier. On déroule le lien souple 90 sur les faces latérales du dessus des accumulateurs jusqu'à insérer et bloquer l'autre portion sphérique 92 dans le logement de l'autre plaque 8. Le lien souple 90 exerce alors un effort de traction sur les plaques 7, 8 en maintenant chacune d'entre elles plaquée contre la face longitudinale des accumulateurs.

Cette étape iii/ peut être réalisée manuellement. On peut procéder au démontage d'un module ou pack-batterie, notamment à des fins de maintenance en désinsérant les portions sphériques 91, 92 de leurs logements respectifs dans les plaques 7, 8. Alternativement, les liens souples 90 peuvent être coupés.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans l'ensemble des exemples illustrés, les emballages rigides des accumulateurs conformes à l'invention sont de format prismatique, l'invention s'applique bien entendu à tous les accumulateurs à emballage souple de format prismatique.

Si la forme illustrée en bout des extrémités libres du lien souple 90 est une portion de sphère, on peut envisager toute autre géométrie de blocage par formes complémentaires, pour s'adapter aux interfaces des pièces mécaniques.

## Revendications

1. Module de batterie (M) ou pack-batterie comprenant :
- une pluralité d'accumulateurs, accolés les uns sur les autres , en particulier de géométrie prismatique (A1, A2...AN), chaque accumulateur comprenant chacun au moins une cellule électrochimique C formée d'une cathode (2), d'une anode (3) et d'un électrolyte intercalé entre la cathode et l'anode, et un emballage (6) souple ou rigide agencé pour contenir avec étanchéité la cellule électrochimique;
- au moins deux plaques de compression (7) en appui chacune contre la pluralité des accumulateurs accolés, au moins une des deux plaques de compression comprenant au moins un logement;
- au moins un élément de compression (9) comprenant un lien souple (90) et au moins une forme de blocage (91, 92) intégrée à ou solidaire d'une des extrémités libres du lien souple, l'élément de compression étant agencé relativement aux accumulateurs et aux plaques de compression de sorte que, lorsque la forme de blocage est bloquée par complémentarités de formes dans le(s) logement(s) de la (des) plaque(s) de compression, le lien souple exerce un effort de traction sur les plaques de compression en les maintenant plaquées contre la pluralité des accumulateurs accolés.

2. Module de batterie (M) ou pack-batterie selon la revendication 1, le logement étant réalisé sur un bord de la plaque de compression et étant prolongé d'une échancrure adaptée pour le passage du lien souple.

3. Module de batterie (M) ou pack-batterie selon la revendication 1 ou 2, le lien souple étant non élastique ou faiblement élastique et de préférence comprenant au moins un fil ou câble en matériau textile, métallique ou composite.

4. Module de batterie (M) ou pack-batterie selon l'une des revendications précédentes, la forme de blocage étant constituée par au moins une portion de sphère rapportée sur l'extrémité libre du lien souple.

5. Module de batterie (M) ou pack-batterie selon la revendication 4, la portion de sphère étant matricée, sertie ou surmoulée sur l'extrémité libre du lien souple.

6. Module de batterie ou pack-batterie selon l'une des revendications précédentes, les accumulateurs étant agencés côte à côte et au moins deux faces longitudinales desdits accumulateurs étant séparées par une couche d'entretoise en matériau compressible, et/ou au moins une face longitudinale d'un accumulateur étant séparée d'une plaque de compression par une couche d'entretoise en matériau compressible.

7. Module de batterie (M) ou pack-batterie selon l'une des revendications précédentes, comprenant :
- deux plaques de compression de part et d'autre des faces longitudinales de la pluralité des accumulateurs accolés ;
- au moins un élément de compression dont le lien souple comprend une forme de blocage à chacune de ses extrémités libres, le lien souple étant agencé autour et en appui contre les faces latérales des accumulateurs avec chacune des formes de blocage bloquée dans un logement d'une des deux plaques de compression en les compressant chacune contre la face longitudinale de la pluralité des accumulateurs accolés sur laquelle elle est en appui.

8. Module de batterie ou pack-batterie selon la revendication 7, comprenant quatre éléments de compression répartis deux-à-deux sur les faces latérales du module.

9. Module de batterie (M) ou pack-batterie selon l'une des revendications précédentes chaque accumulateur étant un accumulateur Li-ion dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

10. Procédé de réalisation d'un module de batterie (M) ou pack-batterie selon l'une des revendications 1 à 9, comprenant les étapes suivantes :
i/ agencement en les accolant d'une pluralité d'accumulateurs, en particulier de géométrie prismatique (A1, A2...AN), chaque accumulateur comprenant chacun au moins une cellule électrochimique C formée d'une cathode (2), d'une anode (3) et d'un électrolyte intercalé entre la cathode et l'anode, et un emballage (6) souple ou rigide agencé pour contenir avec étanchéité la cellule électrochimique;
ii/ mise en place d'au moins une plaque de compression le long d'une face des emballages des accumulateurs agencés à la périphérie du module, la plaque de compression comprenant au moins un logement;
iii/ mise en place d'au moins un élément de compression (9) comprenant un lien souple (90) et au moins une forme de blocage (91, 92) intégrée à ou solidaire d'une des extrémités libres du lien souple, de sorte que, lorsque la forme de blocage est bloquée par complémentarités de formes dans le logement de la plaque de compression, le lien souple exerce un effort de traction sur cette dernière en la maintenant plaquée contre la face des accumulateurs.
